(19) Europäisches Patentamt
European Patent Office
Office européen des brevets

(11) **EP 4 345 687 A1**

(12) **EUROPEAN PATENT APPLICATION**

(43) Date of publication:
03.04.2024 Bulletin 2024/14

(21) Application number: 23152239.2

(22) Date of filing: 18.01.2023

(51) International Patent Classification (IPC):
$G06N\ 3/045$ (2023.01)    $G06N\ 3/084$ (2023.01)
$G06N\ 3/096$ (2023.01)

(52) Cooperative Patent Classification (CPC):
G06N 3/045; G06N 3/084; G06N 3/096

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 27.09.2022 NL 2033154
10.01.2023 NL 2033933

(71) Applicant: NavInfo Europe B.V.
5657 DB Eindhoven (NL)

(72) Inventors:
• SARFRAZ, Fahad
5657 DB Eindhoven (NL)
• ARANI, Elahe
5657 DB Eindhoven (NL)
• ZONOOZ, Bahram
5657 DB Eindhoven (NL)

(74) Representative: van Breda, Jacobus
Octrooibureau Los & Stigter B.V.
P.O. Box 20052
1000 HB Amsterdam (NL)

(54) **METHOD AND SYSTEM FOR IMPROVING CONTINUAL LEARNING THROUGH ERROR SENSITIVITY MODULATION**

(57) A computer-implemented method comprising the step of maintaining a memory of errors along the training trajectory and adjusts the contribution of each sample towards learning based on how far it is from the mean statistics of the error memory. The method of the current invention comprises the step of maintaining an additional semantic memory, called a stable model, which gradually aggregates the knowledge encoded in the weights of the working model. The stable model is utilized to select the low loss samples from the current task for populating the error memory. The different components of the method of the current invention complement each other to effectively reduce the drift in representations at the task boundary and enables consolidation of information across the tasks.

Fig. 1

**Description**

The invention relates to a computer-implemented method for continual learning in artificial neural networks for mitigating abrupt drifts in representations and for gradually adapting to new tasks which are learned in sequence.

<u>General Description</u>

The ability to continually acquire, consolidate, and retain knowledge is a hallmark of intelligence. Particularly, as we look to deploy deep neural networks (DNNs) in the real world, it is essential that learning agents continuously interact and adapt to the ever-changing environment. An autonomous car, for instance, needs to continually adapt to different road, weather, and lighting conditions, learn new traffic signs and lane marking as we move from one place to another.

The human brain excels at lifelong learning as it has been evolved to interact and learn from an ever-changing dynamic environment. This requires it to be robust to significant distribution shifts and noise in order to effectively acquire, consolidate and transfer knowledge under uncertainty. Deep neural networks (DNNs), however, are inherently designed for batch learning from a static data distribution and exhibit catastrophic forgetting [21] of previous tasks when required to learn from a stream of data where information is made incrementally available over time. The model can be exposed to varying degrees of input and/or output distribution shift which makes it challenging to acquire and transfer knowledge while adapting and retaining previous knowledge. The significant gap between the lifelong learning capabilities of humans and DNNs suggest that the brain might have employed fundamentally different error-based learning mechanisms.

Among the different approaches for tackling catastrophic forgetting in DNNs [ 22], methods inspired by replay of past activations in the brain have proven to be effective in reducing forgetting [9, 11]. While effective, they struggle to approximate the joint distribution of tasks with a small buffer, and the model may undergo a drastic drift in representations when there is a distribution shift, leading to forgetting. In particular, when a new set of classes are introduced or there is a considerable change in input distribution, the new samples are poorly dispersed in the representation space and the initial model updates significantly perturb the learned representations of the previous classes [5]. This is even more pronounced in the lower buffer regime, where it is increasingly challenging for the model to recover from the initial disruption. It is therefore critical for effective continual learning (CL) to mitigate the abrupt drift in representations and gradually adapt to the new task.

The different approaches to address the problem of catastrophic forgetting in CL can be broadly divided into three categories: Regularization-based methods regularize the update of the model in the parameter space [8, 14 , 26 , 33] or the functional space [17, 24], Dynamic architecture expands the network to dedicate a distinct set of parameters to each task, and Rehearsal-based methods [2, 25] mitigate forgetting by maintaining an episodic memory buffer and continual rehearsal of samples from previous tasks. Rehearsal-based methods has proven to be an effective approach in challenging continual learning scenarios [9]. The base method, Experience Replay (ER) [25] interleaves the training of the current task with the memory sample to train the model on the approximate joint distribution of tasks. Several studies focus on the different aspect of rehearsal: memory sample selection [13 , 18], sample retrieval from memory [1] and what information to extract and replay from the previous model [7, 17]. Additionally, consistency in predictions of soft-targets can assist ER in preserving information pertaining to previous tasks better as soft-targets capture the rich similarity structure of the data [4]. Dark Experience Replay (DER++) samples the output logits along with the samples in the memory buffer throughout the training trajectory and applies a consistency loss on the update of the model. ER-ACE [5] applies an asymmetric loss between incoming and replay data whereby the cross entropy applied to the incoming data only considers logits of classes of the incoming data.

Recently, several approaches show the benefits of utilizing multiple memory systems [23, 31, 32]. CLS-ER [3] mimics the interplay between fast and slow learning systems by maintaining two additional semantic memories that aggregate the weights of the working model at different timescales using an exponential moving average. SYNERgy [27] creates a synergy between synaptic consolidation and dual memory Experience Replay by tracking the importance of parameters during the training trajectory and anchoring them to the consolidated parameters in the semantic memory which aggregates information across the tasks. Multiple memories have also been shown to be effective in improving learning under label corruption. NCT[36] leverages collaborative learning to use the consensus between two models as an additional source of supervision and applies target variability as a regularization against memorization and over-generalization in DNNs.

It is an object of the current invention to propose a solution that reduces the drift in representations at the task boundary and enables consolidation of information across the tasks. This and other objects which will become apparent from the following disclosure, are provided with a computer-implemented method for continual learning in artificial neural networks, a computer-readable medium, and an autonomous vehicle comprising a data processing system, having the features of one or more of the appended claims.

Continual Learning requires a learning agent to interact and acquire knowledge from a dynamic environment which exposes the agent to varying degrees and types of distribution shifts. A major cause for forgetting in DNNs is the drastic change in parameter space when presented with a set of previously unseen classes or a considerable change in input distribution. The human brain, on the other hand, has been evolved to be robust to distribution shifts and excel at lifelong learning. A closer look at the dynamics of error-based learning in the brain suggests that it utilizes a memory of errors to modulate its sensitivity to error as a function of error magnitude, whereby the brain learns more from small consistent errors compared to large errors.

In a first aspect of the invention, the computer-implemented method for continual learning in an artificial neural network comprising the steps of:

- providing input samples in form of continuous data stream containing a sequence of tasks; (such input samples can be images acquired by a video recorder or any other image capturing device)
- training a working model of the network by using said input samples;

wherein, the method comprises the step of maintaining a memory of errors during training by:

- calculating a supervised loss, preferably mean cross entropy loss, on the input samples from the current task; and
- updating the said memory of errors with an exponential moving average of said supervised loss;

The method comprises the step of maintaining a fixed-size episodic memory by storing input samples from previous tasks in said episodic memory to facilitate the consolidation of knowledge by enabling interleaved learning of samples from previous tasks.

Advantageously, the step of maintaining a fixed-size episodic memory comprises the step of employing reservoir sampling wherein the joint distribution of the data stream is approximated by assigning to each incoming sample from the said data stream an equal probability of being represented in the episodic memory.

The method comprises the step of maintaining a long-term semantic memory, stable model, for building consolidated structural representations by progressively aggregating synaptic weights of the working model during training.

Suitably, the step of maintaining the stable model comprises the step of initializing the stable model with weights of the working model.

The step of maintaining the stable model comprises the step of stochastically updating said stable model using an exponentially moving average of weights of the working model.

The method comprises the step of determining a degree of contribution of each input sample towards learning by calculating a cross-entropy loss for each input sample on the stable model by for evaluating a weight given to each sample by calculating the distance between the cross-entropy loss of said input samples and the mean statistics of the error memory.

The method comprises the step of adjusting a level of contribution of an input sample to the training of the network by assigning a weight to said input sample wherein, the weight is configured to be inversely proportional to the distance between the cross-entropy loss of said input sample and the exponentially moving average of the cross-entropy loss in the error memory.

The method comprises the step of pre-selecting candidates for the episodic memory wherein only task samples with a loss lower than a user-defined threshold are passed to the episodic memory for selection.

The method comprises the steps of:

- implementing a dual memory replay mechanism wherein the stable model is configured for extracting semantic information from samples of the episodic memory; and
- enforcing consistency in a functional space by using relational knowledge encoded in output logits.

The method comprises the step of calculating a loss on samples from the episodic memory by calculating a combination of cross-entropy loss and a semantic consistency loss.

The method comprises the step of calculating an error sensitivity modulated task loss for the working model by calculating a weighted sum of all samples in a current task.

The method comprises the step of calculating an overall loss for the working memory by calculating a sum of losses on samples of a current task samples and samples of the episodic memory.

The method comprises the step of filtering sample losses by configuring the distance between the cross-entropy loss of input sample and the exponentially moving average of the cross-entropy loss to be equal or less than one standard deviation.

The method comprises the step of updating the memory of errors with the exponential moving average of the means of filtered sample losses in each batch.

The method comprises the step of preventing abrupt changes in estimations at the task boundary by employing a task warm-up phase wherein, the exponentially moving average is not updated during said warm-up phase.

In a second embodiment of the invention, the computer-readable medium is provided with a computer program wherein when said computer program is loaded and executed by a computer, said computer program causes the computer to carry out the steps of the computer-implemented method according to any one of aforementioned steps.

In a third embodiment of the invention, the autonomous vehicle comprising a data processing system loaded with a computer program wherein said program is arranged for causing the data processing system to carry out the steps of the computer-implemented method according to any one of aforementioned steps for enabling said autonomous vehicle to continually adapt and acquire knowledge from an environment surrounding said autonomous vehicle.

The invention will hereinafter be further elucidated with reference to the drawing of an exemplary embodiment of a computer-implemented method, a computer program and an autonomous vehicle comprising a data processing system according to the invention that is not limiting as to the appended claims.

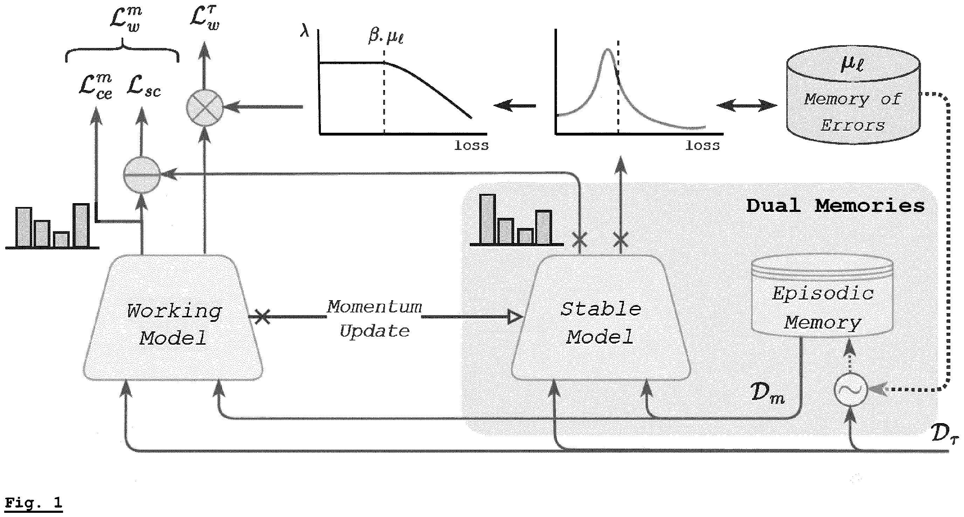

In the drawing, figure 1 shows a schematic diagram for the computer-implemented method according to the invention.

Whenever in the figure the same reference numerals are applied, these numerals refer to the same parts.

## Detailed description

### Abrupt representation drift in DNNs

The sequential learning of tasks in CL potentially exposes the model to varying degrees of distribution shifts in the input and output space. In particular, the introduction of a new set of classes at the task boundary may lead to an abrupt representation drift leading to forgetting. [5] show that the samples from the new classes are poorly dispersed and lie near and within the representation space of the previous classes. Therefore, the initial parameter updates cause significant perturbation of the representations of the previous classes. This is exacerbated by the inherent imbalance between the samples of the new classes in the current task and the stored samples of previous classes in the buffer, especially in the lower buffer size regime. [5] further show that while the model can somewhat recover from the disruptive parameter updates at the task transition with larger buffer sizes, the model fails to recover when the buffer size is small. Furthermore, learning scales linearly with the error size in standard training. Therefore, the considerably higher cross-entropy loss from the unobserved classes dominates learning and biases the gradients towards correctly classifying the samples from the new classes at the expense of the fewer samples from previous classes. These insights suggest that there is a need for a different learning paradigm tailored for CL which is more robust to the abrupt distribution shifts.

### Inspiration from the Brain

The human brain, on the other hand, has evolved to be robust to distribution shifts and continuously learns and interacts with a dynamic environment. This is enabled by a complex set of mechanisms and by interactions of multiple memory systems. Particularly, one should look into the dynamics of error-based learning in the brain to draw some insights for the design of DNNs. Unlike DNNs where learning scales linearly with error size, evidence suggests that the brain modulates its sensitivity to error as a function of error magnitude, whereby it learns more from small consistent errors compared to large errors [6, 19, 28]. To enable such a mechanism, the brain seems to be maintaining an additional memory of errors which controls the modulation of error sensitivity [12].

Another salient component of the learning machinery of the brain is the effective utilization of multiple memory systems which operate at different timescales [10, 16]. Furthermore, the replay of past neural activation patterns is considered to facilitate memory formation and consolidation [20, 30]. These components may play a critical role in enabling lifelong learning in the brain and tackling the challenges of distribution shifts.

### The computer-implemented method of the current invention

The computer-implemented method of the current invention aims to incorporate a principled mechanism for the modulation of error sensitivity based on the history of errors in a dual memory experience replay mechanism as shown in Figure 1. The method involves training a working model $\theta_w$ on a sequence of tasks, while maintaining two additional memories: an instance-based fixed-size episodic memory, M, which stores input samples from previous tasks, and a parametric stable model, $\theta_s$, which gradually aggregates the knowledge in the working model and builds consolidated structural representations.

Continual Learning Setting:

The CL setting considered here involves learning a sequence of T independent and identically distributed (i.i.d) tasks from a non-stationary data stream, $D_t \in (D_1, .., D_T)$ where the goal is to approximate the joint distribution of all the tasks and distinguish between the observed classes without the availability of task identity at inference. At each training step, the model has access to a random batch of labeled samples drawn from the current task $(x_t, y_t) \sim D_t$ and the episodic memory $(x_m, y_m) \sim M$.

Learning from low loss:

To mimic the principled mechanism for modulating the error sensitivity in the brain, the method of the current invention comprises the steps of maintaining a memory of errors along the training trajectory and utilizing said memory of errors to inform on how much the model is allowed to learn from each sample. To this end, the method of the current invention comprises the step of calculating an exponential moving average (EMA) of the cross-entropy loss, preferably the mean cross-entropy loss, $\mu_l$, on the batch of samples from the new task. As the semantic memory is designed to consolidate knowledge and generalize well across the tasks, the method of the current invention comprises the step of using said semantic memory to evaluate how well-placed the new samples are in the consolidated decision boundary and representation space. This also avoids the confirmation bias that can arise from using the same learning model. For each sample, i, in the batch from the current task, the cross-entropy loss, $L_{ce}$ is evaluated on the semantic memory. Subsequently, the value of the weight assigned to each sample for the supervised loss is controlled by how far the sample loss is from the average running estimate, $\mu_l$:

$$\mathcal{L}_s^i = \mathcal{L}_{ce}(f(x_b^i; \theta_s), y_b^i) \tag{1}$$

$$\lambda^i = \begin{cases} 1 & \text{if } \mathcal{L}_s^i \leq \beta.\mu_l \\ \mu_l/\mathcal{L}_s^i & \text{otherwise} \end{cases} \tag{2}$$

where $\beta$ controls the margin for being considered a low loss sample. The employed weighting scheme essentially reduces the weight, $\lambda_i$ as the sample loss moves away from the mean estimate and consequently the learning from high loss errors so that the model learns more from loss samples. The error sensitivity modulated task loss for the working model is then given by the weighted sum of all the samples in the current task batch as follows:

$$\mathcal{L}_w^t = \sum_i^{|x_b|} \lambda^i.\mathcal{L}_{ce}(f(X_b^i; \theta_w), y_b^i) \tag{3}$$

The simple approach of weighting down the contributions of large errors, can effectively reduce the abrupt drift in representations at the task boundary and enable the model to gradually adapt to the new task. For instance, when previously unobserved classes are introduced, the loss for samples belonging to these classes would be higher than the running estimate and hence the weights of these samples would be reduced so that the model can gradually adapt to them without disruptions the learned representations of previous classes. This also implicitly accounts for the inherent imbalance between the samples belonging to the new task and previous tasks in the memory by weighing down the new task samples and giving higher weight to samples in memory which will most likely have low loss as they have been learned.

The memory of errors is maintained using an exponential moving average of loss of semantic memory on the task batch. To prevent sudden changes in the estimate at the task boundary a task warm-up period is introduced, during which the running estimate is not updated. To further keep the error memory stable and make it robust to outliers in the batch, the batch statistics is evaluated on samples losses which lie within 1 standard deviation (std) of mean batch loss:

$$\mathcal{L}_s^f = \{\mathcal{L}_s^i \in \mathcal{L}_s : \mathcal{L}_s^i \leq \mu_s + \sigma_s\} \tag{4}$$

where $\mu_s$ and $\sigma_s$ are the mean and 1 std of the semantic memory task loss, $L_s$. The mean of the filtered sample losses, $L^f_s$, is then used to update the error memory:

$$\mu_l \leftarrow \alpha_l\mu_l + (1 - \alpha_l)\overline{\mathcal{L}_s^f} \tag{5}$$

where $\alpha_l$ is the decay parameter which controls how quickly the running estimate adapts to the current values. EMA provides an efficient approach for maintaining a memory of errors which can be effectively utilized to modulate the sensitivity to errors for effectively avoiding disruptions in the representations of previously learned classes.

Dual Memory System:

To mimic the interplay of multiple memory systems in the brain and employ different timescales of learning, the method of the current invention comprises the step of maintaining a parametric semantic memory which gradually accumulates structural knowledge and a fixed size episodic memory.

The episodic memory enables the consolidation of knowledge through interleaved learning of samples from previous tasks. The method of the current invention comprises the step of employing Reservoir Sampling [29] to maintain the fixed size memory buffer which attempts to approximate the distribution of the data stream by assigning equal probability of being represented in the buffer to each sample in the stream. Importantly, the method of the current invention comprises the step of pre-selecting candidates for the episodic memory buffer whereby only samples in the current batch of task samples having a loss lower than a user-defined threshold are passed to the buffer for selection:

$$(x_c, y_c) = \{(x^i, y^i) \in (x_t, y_t) : \mathcal{L}_s^i \leq \beta.\mathcal{L}_\mu\} \qquad (6)$$

This ensure that only the samples that have been learned in the current batch with high weight are added to the buffer which are better suited for retaining information.

The stable model is a parametric system that slowly aggregates and consolidates the knowledge encoded in the learned connections [15] of the working model. The method of the current invention comprises the steps of initializing the stable model with the weights of the working model and updating said stable model using EMA of the working model weights as follows:

$$\theta_s \leftarrow \alpha\theta_s + (1 - \alpha)\,\theta_w, \qquad if\ r > a \sim U(0,1) \qquad (7)$$

where $\alpha$ is the decay parameter which controls how quickly the semantic model adapts to the working model and r is the update rate to enable the stochastic update of stable model throughout the training trajectory. Stochastic update leads to more diversity in the snapshots of the working model and is more biologically plausible than deterministic update [37,38].

In addition to controlling the selection of low loss and high loss samples, the stable model interacts with episodic memory to implement a dual memory replay mechanism for effective consolidation of knowledge. It extracts the semantic information from the samples of the episodic memory and the relational knowledge encoded in the output logits is utilized to enforce consistency in the functional space. The semantic consistency loss encourages the working model to adapt the representation and the decision boundary while preserving the relational structure of previous classes. The loss on the samples from the episodic memory is given by the combination of cross-entropy loss and semantic consistency loss:

$$\mathcal{L}_w^m = \mathcal{L}_{ce}(f(X_m; \theta_w), y_m) + \gamma\mathcal{L}_{sc}(f(x_m; \theta_w), f(x_m; \theta_s)) \qquad (8)$$

where the semantic consistency loss, $L_{sc}$, uses the mean squared loss and $\gamma$ controls the strength of consistency loss. The overall loss for the working model is the sum of loss on the new task samples and the samples from the episodic memory i.e., $L_w = L^m_w + L^s_w$.

The slow aggregation of knowledge in the stable model further aids in mitigating the abrupt change in representations. Even after the potentially disruptive initial updates at the task boundary, the stable model retains the representations of the previous classes, and the enforced consistency loss encourages the working model to retain the relational structure among the previous classes and not deviate too much from the previous classes. Therefore, the two components complement each other, and the modulation of error sensitivity coupled with the slow acquisition of semantic knowledge effectively reduces the drift in parameters and, hence forgetting.

For inference, the method of the current invention comprises the step of using the stable model to make predictions as it builds consolidated representations which can generalize well across the tasks.

Figure 1 illustrates how the method of the current invention incorporates a principled mechanism for the modulation of error sensitivity based on the history of errors in a dual memory experience replay mechanism. In addition to a fixed-size episodic memory, it comprises maintaining a parametric semantic memory, called stable model, that gradually aggregates the structural knowledge encoded in the weights of the working model using momentum update. The new task samples are evaluated in the stable model which is used to assign a weight to each sample of the supervised loss based on how far the sample loss is from the average running estimate, $\mu_l$, such that the model learns more from low errors. The mean batch statistics are also utilized to update the memory of errors. The samples from the buffer of the memory of errors are learned on a combination of cross-entropy loss and semantic consistency loss for retaining the relational structure of the previously learned classes. Finally, the reservoir sampling approach is adapted for maintaining the buffer of the episodic memory such that low-loss samples from the current batch are pre-selected as candidates for being represented in the memory buffer to ensure that only well-learned samples are added to the buffer which are better suited for retaining information. The complementary nature of all these components in the method of the invention together provides an effective approach for reducing the abrupt drift in representations and, hence reducing forgetting.

Algorithm 1 provides further details and flow of the method.

---

**Algorithm 1** Error Sensitivity Modulation based Experience Replay (ESMER) Algorithm

**Input and Params:** error memory params $\alpha_\ell$ and $\beta$; stable model params $\alpha$ and $r$; semantic consistency weight $\gamma$; data stream $\mathcal{D}$; learning rate $\eta$

**Initialize:** $l_\mu = 0$, $\mathcal{M} \leftarrow \{\}$, $\theta_s = \theta_w$

1: **while** Training **do**

2:      Sample batch from task stream, $(x_\tau, y_\tau) \sim \mathcal{D}_\tau$, and episodic memory, $(x_m, y_m) \sim \mathcal{M}$

3:      Evaluate loss of task samples on stable model, $l_s^i$ (Eq. 1)

4:      Get the weights of task samples, $\lambda^i$ (Eq. 2)

5:      Evaluate the sensitivity-modulated task loss, $\mathcal{L}_w^\tau = \sum_i^{|x_b|} \lambda^i \cdot l_s^i$

6:      Evaluate the cross-entropy and consistency loss on memory samples, $\mathcal{L}_w^m$ (Eq. 7)

7:      Combine overall loss: $\mathcal{L}_w = \mathcal{L}_w^\tau + \mathcal{L}_w^m$

8:      Update parameters of working model: $\theta_w \leftarrow \theta_w - \eta \nabla_{\theta_w} \mathcal{L}_w$

9:      Update the stable model: $\theta_s \leftarrow \alpha\theta_s + (1 - \alpha)\,\theta_w$, *if r > a ~ U(0,1)* (Eq. 6)

10:     Filter candidates for episodic memory, $(x_c, y_c)$ (Eq. 5)

11:     Update episodic memory: $\mathcal{M} \leftarrow \mathrm{Reservoir}(\mathcal{M}, (x_c, y_c))$

12:     Remove outliers from task batch loss: $l_s^f$ (Eq. 3)

13:     Update error memory if epoch > task warm-up period: $\mu_\ell$ (Eq. 4)

     **return** $\theta_s$

---

Embodiments of the present invention can include every combination of features that are disclosed herein independently from each other.

Typical application areas of the invention include, but are not limited to:

- Road condition monitoring
- Road signs detection
- Parking occupancy detection
- Defect inspection in manufacturing
- Insect detection in agriculture
- Aerial survey and imaging

Although the invention has been discussed in the foregoing with reference to an exemplary embodiment of the method of the invention, the invention is not restricted to this particular embodiment which can be varied in many ways without departing from the invention. The discussed exemplary embodiment shall therefore not be used to construe the append-ed claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

Variations and modifications of the present invention will be obvious to those skilled in the art and it is intended to cover in the appended claims all such modifications and equivalents. The entire disclosures of all references, applications, patents, and publications cited above are hereby incorporated by reference. Unless specifically stated as being "essential" above, none of the various components or the interrelationship thereof are essential to the operation of the invention. Rather, desirable results can be achieved by substituting various components and/or reconfiguration of their relationships with one another.

Optionally, embodiments of the present invention can include a general or specific purpose computer or distributed system programmed with computer software implementing steps described above, which computer software may be in any appropriate computer language, including but not limited to C++, FORTRAN, ALGOL, BASIC, Java, Python, Linux, assembly language, microcode, distributed programming languages, etc. The apparatus may also include a plurality of such computers / distributed systems (e.g., connected over the Internet and/or one or more intranets) in a variety of hardware implementations. For example, data processing can be performed by an appropriately programmed microprocessor, computing cloud, Application Specific Integrated Circuit (ASIC), Field Programmable Gate Array (FPGA), or the like, in conjunction with appropriate memory, network, and bus elements. One or more processors and/or microcontrollers can operate via instructions of the computer code and the software is preferably stored on one or more tangible non-transitive memory-storage devices.

**References:**

[1] Rahaf Aljundi, Eugene Belilovsky, Tinne Tuytelaars, Laurent Charlin, Massimo Caccia, Min Lin, and Lucas Page-Caccia. Online continual learning with maximal interfered retrieval. In Advances in Neural Information Processing Systems, pages 11849-11860, 2019.

[2] Rahaf Aljundi, Min Lin, Baptiste Goujaud, and Yoshua Bengio. Gradient based sample selection for online continual learning. In Advances in Neural Information Processing Systems, pages 11816-11825, 2019.

[3] Elahe Arani, Fahad Sarfraz, and Bahram Zonooz. Learning fast, learning slow: A general continual learning method based on complementary learning system. In International Conference on Learning Representations, 2021.

[4] Prashant Bhat, Bahram Zonooz, and Elahe Arani. Consistency is the key to further mitigating catastrophic forgetting in continual learning. arXiv preprint arXiv:2207.04998, 2022.

[5] Lucas Caccia, Rahaf Aljundi, Nader Asadi, Tinne Tuytelaars, Joelle Pineau, and Eugene Belilovsky. New insights on reducing abrupt representation change in online continual learning. In International Conference on Learning Representations, 2021.

[6] Luis Nicolas Gonzalez Castro, Alkis M Hadjiosif, Matthew A Hemphill, and Maurice A Smith. Environmental consistency determines the rate of motor adaptation. Current Biology, 24(10):1050-1061, 2014.

[7] Sayna Ebrahimi, Suzanne Petryk, Akash Gokul, William Gan, Joseph E Gonzalez, Marcus Rohrbach, et al. Remembering for the right reasons: Explanations reduce catastrophic forgetting. In International Conference on Learning Representations, 2020.

[8] Mehrdad Farajtabar, Navid Azizan, Alex Mott, and Ang Li. Orthogonal gradient descent for continual learning. In International Conference on Artificial Intelligence and Statistics, pages 3762-3773. PMLR, 2020.

[9] Sebastian Farquhar and Yarin Gal. Towards robust evaluations of continual learning. arXiv preprint arXiv:1805.09733, 2018.

[10] Demis Hassabis, Dharshan Kumaran, Christopher Summerfield, and Matthew Botvinick. Neuroscience-inspired artificial intelligence. Neuron, 95(2):245-258, 2017.

[11] Tyler L Hayes, Giri P Krishnan, Maxim Bazhenov, Hava T Siegelmann, Terrence J Sejnowski, and Christopher Kanan. Replay in deep learning: Current approaches and missing biological elements. ArXiv preprint arXiv:2104.04132, 2021.

[12] David J Herzfeld, Pavan A Vaswani, Mollie K Marko, and Reza Shadmehr. A memory of errors in sensorimotor learning. Science, 345(6202):1349-1353, 2014.

[13] David Isele and Akansel Cosgun. Selective experience replay for lifelong learning. In Proceedings of the AAAI Conference on Artificial Intelligence, volume 32, 2018.

[14] James Kirkpatrick, Razvan Pascanu, Neil Rabinowitz, Joel Veness, Guillaume Desjardins, Andrei A Rusu, Kieran Milan, John Quan, Tiago Ramalho, Agnieszka Grabska-Barwinska, et al. Overcoming catastrophic forgetting in neural networks. Proceedings of the national academy of sciences, 114(13):3521-3526, 2017.

[15] Giri P Krishnan, Timothy Tadros, Ramyaa Ramyaa, and Maxim Bazhenov. Biologically inspired sleep algorithm for artificial neural networks. arXiv preprint arXiv:1908.02240, 2019.

[16] Dharshan Kumaran, Demis Hassabis, and James L McClelland. What learning systems do intelligent agents need? complementary learning systems theory updated. Trends in cognitive sciences, 20(7):512-534, 2016.

[17] Zhizhong Li and Derek Hoiem. Learning without forgetting. IEEE transactions on pattern analysis and machine intelligence, 40(12):2935-2947, 2017.

[18] David Lopez-Paz and Marc'Aurelio Ranzato. Gradient episodic memory for continual learning. In Advances in neural information processing systems, pages 6467-6476, 2017.

[19] Mollie K Marko, Adrian M Haith, Michelle D Harran, and Reza Shadmehr. Sensitivity to prediction error in reach adaptation. Journal of neurophysiology, 108(6) :1752-1763, 2012.6

[20] James L McClelland, Bruce L McNaughton, and Randall C O'Reilly. Why there are complementary learning systems in the hippocampus and neocortex: insights from the successes and failures of connectionist models of learning and memory. Psychological review, 102(3) :419, 1995.

[21] Michael McCloskey and Neal J Cohen. Catastrophic interference in connectionist networks: The sequential learning problem. In Psychology of learning and motivation, volume 24, pages 109-165. Elsevier, 1989.

[22] German I Parisi, Ronald Kemker, Jose L Part, Christopher Kanan, and Stefan Wermter. Continual lifelong learning with neural networks: A review. Neural Networks, 113:54-71, 2019.

[23] Quang Pham, Chenghao Liu, and Steven Hoi. Dualnet: Continual learning, fast and slow. Advances in Neural Information Processing Systems, 34:16131-16144, 2021.

[24] Amal Rannen, Rahaf Aljundi, Matthew B Blaschko, and Tinne Tuytelaars. Encoder based lifelong learning. In Proceedings of the IEEE International Conference on Computer Vision, pages 1320-1328, 2017.

[25] Matthew Riemer, Ignacio Cases, Robert Ajemian, Miao Liu, Irina Rish, Yuhai Tu, and Gerald Tesauro. Learning to learn without forgetting by maximizing transfer and minimizing interference. arXiv preprint arXiv:1810.11910, 2018.

[26] Hippolyt Ritter, Aleksandar Botev, and David Barber. Online structured laplace approximations for overcoming catastrophic forgetting. In Advances in Neural Information Processing Systems, pages 3738-3748, 2018.

[27] Fahad Sarfraz, Elahe Arani, and Bahram Zonooz. Synergy between synaptic consolidation and experience replay for general continual learning. arXiv preprint arXiv:2206.04016, 2022.

[28] Maurice A Smith and Reza Shadmehr. Modulation of the rate of error-dependent learning by the statistical properties of the task. Advances in Computational Motor Control, 3:1392-1404, 2004.

[29] Jeffrey S Vitter. Random sampling with a reservoir. ACM Transactions on Mathematical Software (TOMS), 11(1):37-57, 1985.

[30] Matthew P Walker and Robert Stickgold. Sleep-dependent learning and memory consolidation. Neuron, 44(1):121-133, 2004.

[31] Zifeng Wang, Zizhao Zhang, Sayna Ebrahimi, Ruoxi Sun, Han Zhang, Chen-Yu Lee, Xiaoqi Ren, Guolong Su, Vincent Perot, Jennifer Dy, et al. Dualprompt: Complementary prompting for rehearsal-free continual learning. arXiv preprint arXiv:2204.04799, 2022.

[32] Zifeng Wang, Zizhao Zhang, Chen-Yu Lee, Han Zhang, Ruoxi Sun, Xiaoqi Ren, Guolong Su, Vincent Perot, Jennifer Dy, and Tomas Pfister. Learning to prompt for continual learning. In Proceedings of the IEEE/CVF Conference on Computer Vision and Pattern Recognition, pages 139-149, 2022.

[33] Friedemann Zenke, Ben Poole, and Surya Ganguli. Continual learning through synaptic intelligence. Proceedings of machine learning research, 70:3987, 2017.

[34] Sarfraz, Fahad, Elahe Arani, and Bahram Zonooz. "Knowledge distillation beyond model compression." 2020 25th International Conference on Pattern Recognition (ICPR). IEEE, 2021.

[35] Bhat, Prashant, Bahram Zonooz, and Elahe Arani. "Task Agnostic Representation Consolidation: a Self-supervised based Continual Learning Approach." arXiv preprint arXiv:2207.06267 (2022).

[36] Sarfraz, Fahad, Elahe Arani, and Bahram Zonooz. "Noisy concurrent training for efficient learning under label noise." Proceedings of the IEEE/CVF Winter Conference on Applications of Computer Vision. 2021.

[37] Arani, Elahe, Fahad Sarfraz, and Bahram Zonooz. "Noise as a resource for learning in knowledge distillation." Proceedings of the IEEE/CVF Winter Conference on Applications of Computer Vision. 2021.

[38] Maass, Wolfgang. "Noise as a resource for computation and learning in networks of spiking neurons." Proceedings of the IEEE 102.5 (2014): 860-880.

**Claims**

1. A computer-implemented method for continual learning in an artificial neural network comprising the steps of

- providing input samples in form of continuous data stream containing a sequence of tasks;
- training a working model of the network by using said input samples;
- maintaining a stable model comprising a long-term semantic memory for building consolidated structural representations by progressively aggregating synaptic weights of the working model during training; and
- maintaining a fixed-size episodic memory by storing input samples from previous tasks in said episodic memory for consolidating knowledge through interleaved learning of samples from previous tasks,

**characterized in that** the method comprises the step of maintaining a memory of errors during training by:

- calculating a supervised loss, preferably a mean cross entropy loss, on the input samples and a current task; and
- updating said memory of errors with an exponential moving average of said cross-entropy loss;

2. The computer-implemented method according to claim 1 **characterized in that** the step of maintaining a fixed-size episodic memory comprises the step of employing reservoir sampling wherein a joint distribution of data stream is approximated by assigning to each sample in said data stream an equal probability of being represented in the episodic memory.

3. The computer-implemented method according to claim 1 or 2 **characterized in that** the step of maintaining a stable model comprising a long-term semantic memory comprises the step of initializing the semantic memory with weights of the working memory.

4. The computer-implemented method according to anyone of the preceding claims **characterized in that** the step of maintaining a stable model comprising a long-term semantic memory comprises the step of stochastically updating said semantic memory using an exponentially moving average of weights of the working memory.

5. The computer-implemented method of any one of the preceding claims **characterized in that** the method comprises the step of determining a degree of contribution of each input sample towards learning by calculating a cross-entropy loss for each input sample on the stable model for evaluating a weight given to each sample by calculating a distance between the cross-entropy loss of said input samples and mean statistics of the memory of errors, such as the exponentially moving average of the cross-entropy loss in the error memory.

6. The computer-implemented method of any one of the preceding claims **characterized in that** the method comprises the step of adjusting a level of contribution of an input sample to the training of the working model by assigning a weight to said input sample, wherein the weight is configured to be inversely proportional to the distance between the cross-entropy loss of said input sample and mean statistics of the error memory, such as the exponentially moving average of the cross-entropy loss in the memory of errors.

7. The computer-implemented method of any one of the preceding claims **characterized in that** the method comprises the step of pre-selecting candidates for the episodic memory wherein only task samples with a loss lower than a user-defined threshold are passed to the episodic memory for selection.

8. The computer-implemented method of any one of the preceding claims **characterized in that** the method comprises the steps of:

- implementing a dual memory replay mechanism wherein the stable model is configured for extracting semantic information from samples of the episodic memory; and
- enforcing consistency in a functional space by using relational knowledge encoded in output logits.

9. The computer-implemented method of any one of the preceding claims **characterized in that,** the method comprises the step of calculating a loss on the samples from the episodic memory by calculating a combination of cross-entropy loss and a semantic consistency loss.

10. The computer-implemented method of any one of the preceding claims **characterized in that,** the method comprises the step of calculating an error sensitivity modulated task loss for the working model by calculating a weighted sum of all samples in a current task.

11. The computer-implemented method of any one of the preceding claims **characterized in that,** the method comprises the step of calculating an overall loss for the working model by calculating a sum of losses on samples of a current task samples and samples of the episodic memory.

**12.** The computer-implemented method of any one of the preceding claims **characterized in that,** the method comprises the step of filtering sample losses by configuring the distance between the cross-entropy loss of input sample and mean statistics of the error memory, such as the exponentially moving average of the cross-entropy loss in the memory of errors to be equal or less than a predefined standard deviation.

**13.** The computer-implemented method of any one of the preceding claims **characterized in that,** the method comprises the step of updating the memory of errors with the exponential moving average of the means of filtered sample losses.

**14.** The computer-implemented method of any one of the preceding claims **characterized in that,** the method comprises the step of preventing abrupt changes in estimations at the task boundary by employing a task warm-up phase wherein, the exponentially moving average is not updated during said warm-up phase.

**15.** A computer-readable medium provided with a computer program **characterized in that,** when said computer program is loaded and executed by a computer, said computer program causes the computer to carry out the steps of the computer-implemented method according to any one of claims 1-14.

**16.** An autonomous vehicle comprising a data processing system loaded with a computer program **characterized in that,** said program is arranged for causing the data processing system to carry out the steps of the computer-implemented method according to any one of claim 1-14 for enabling said autonomous vehicle to continually adapt and acquire knowledge from an environment surrounding said autonomous vehicle.

**Fig. 1**

# EUROPEAN SEARCH REPORT

Application Number

EP 23 15 2239

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ELAHE ARANI ET AL: "Learning Fast, Learning Slow: A General Continual Learning Method based on Complementary Learning System", ARXIV.ORG, CORNELL UNIVERSITY LIBRARY, 201 OLIN LIBRARY CORNELL UNIVERSITY ITHACA, NY 14853, 10 May 2022 (2022-05-10), XP091217140, * abstract * * Section 1 * * Section 3.2 * * Algorithm 1 * * figure 1 * | 1-16 | INV. G06N3/045 G06N3/084 G06N3/096 |
| X | FAHAD SARFRAZ ET AL: "SYNERgy between SYNaptic consolidation and Experience Replay for general continual learning", ARXIV.ORG, CORNELL UNIVERSITY LIBRARY, 201 OLIN LIBRARY CORNELL UNIVERSITY ITHACA, NY 14853, 8 June 2022 (2022-06-08), XP091242323, * abstract * * Section 3.1 * * Section 3.2 * * Algorithm 1 * * figure 1 * | 1-16 | |
| T | FAHAD SARFRAZ ET AL: "Error Sensitivity Modulation based Experience Replay: Mitigating Abrupt Representation Drift in Continual Learning", ARXIV.ORG, CORNELL UNIVERSITY LIBRARY, 201 OLIN LIBRARY CORNELL UNIVERSITY ITHACA, NY 14853, 14 February 2023 (2023-02-14), XP091443875, * the whole document * | 1-16 | TECHNICAL FIELDS SEARCHED (IPC) G06N |

The present search report has been drawn up for all claims

| Place of search | Date of completion of the search | Examiner |
|---|---|---|
| Berlin | 19 June 2023 | Pose Rodríguez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **RAHAF ALJUNDI ; EUGENE BELILOVSKY ; TINNE TUYTELAARS ; LAURENT CHARLIN ; MASSIMO CACCIA ; MIN LIN ; LUCAS PAGE-CACCIA.** Online continual learning with maximal interfered retrieval. *In Advances in Neural Information Processing Systems,* 2019, 11849-11860
- **RAHAF ALJUNDI ; MIN LIN ; BAPTISTE GOUJAUD ; YOSHUA BENGIO.** Gradient based sample selection for online continual learning. *Advances in Neural Information Processing Systems,* 2019, 11816-11825
- **ELAHE ARANI ; FAHAD SARFRAZ ; BAHRAM ZONOOZ.** Learning fast, learning slow: A general continual learning method based on complementary learning system. *International Conference on Learning Representations,* 2021
- **PRASHANT BHAT ; BAHRAM ZONOOZ ; ELAHE ARANI.** Consistency is the key to further mitigating catastrophic forgetting in continual learning. *arXiv preprint arXiv:2207.04998,* 2022
- **LUCAS CACCIA ; RAHAF ALJUNDI ; NADER ASADI ; TINNE TUYTELAARS ; JOELLE PINEAU ; EUGENE BELILOVSKY.** New insights on reducing abrupt representation change in online continual learning. *International Conference on Learning Representations,* 2021
- **LUIS NICOLAS GONZALEZ CASTRO ; ALKIS M HADJIOSIF ; MATTHEW A HEMPHILL ; MAURICE A SMITH.** Environmental consistency determines the rate of motor adaptation. *Current Biology,* 2014, vol. 24 (10), 1050-1061
- **SAYNA EBRAHIMI ; SUZANNE PETRYK ; AKASH GOKUL ; WILLIAM GAN ; JOSEPH E GONZALEZ ; MARCUS ROHRBACH et al.** Remembering for the right reasons: Explanations reduce catastrophic forgetting. *International Conference on Learning Representations,* 2020
- **MEHRDAD FARAJTABAR ; NAVID AZIZAN ; ALEX MOTT ; ANG LI.** Orthogonal gradient descent for continual learning. *International Conference on Artificial Intelligence and Statistics,* 2020, 3762-3773
- **SEBASTIAN FARQUHAR ; YARIN GAL.** Towards robust evaluations of continual learning. *arXiv preprint arXiv:1805.09733,* 2018

- **DEMIS HASSABIS ; DHARSHAN KUMARAN ; CHRISTOPHER SUMMERFIELD ; MATTHEW BOTVINICK.** Neuroscience-inspired artificial intelligence. *Neuron,* 2017, vol. 95 (2), 245-258
- **TYLER L HAYES ; GIRI P KRISHNAN ; MAXIM BAZHENOV ; T SIEGELMANN ; TERRENCE J SEJNOWSKI ; CHRISTOPHER KANAN.** Replay in deep learning: Current approaches and missing biological elements. *ArXiv preprint arXiv:2104.04132,* 2021
- **DAVID J HERZFELD ; PAVAN A VASWANI ; MOLLIE K MARKO ; REZA SHADMEHR.** A memory of errors in sensorimotor learning. *Science,* 2014, vol. 345 (6202), 1349-1353
- **DAVID ISELE ; AKANSEL COSGUN.** Selective experience replay for lifelong learning. *Proceedings of the AAAI Conference on Artificial Intelligence,* 2018, vol. 32
- **JAMES KIRKPATRICK ; RAZVAN PASCANU ; NEIL RABINOWITZ ; JOEL VENESS ; GUILLAUME DESJARDINS ; ANDREI A RUSU ; KIERAN MILAN ; JOHN QUAN ; TIAGO RAMALHO ; AGNIESZKA GRABSKA-BARWINSKA et al.** Overcoming catastrophic forgetting in neural networks. *Proceedings of the national academy of sciences,* 2017, vol. 114 (13), 3521-3526
- **GIRI P KRISHNAN ; TIMOTHY TADROS ; RAMYAA RAMYAA ; MAXIM BAZHENOV.** Biologically inspired sleep algorithm for artificial neural networks. *arXiv preprint arXiv:1908.02240,* 2019
- **DHARSHAN KUMARAN ; DEMIS HASSABIS ; JAMES L MCCLELLAND.** What learning systems do intelligent agents need? complementary learning systems theory updated. *Trends in cognitive sciences,* 2016, vol. 20 (7), 512-534
- **ZHIZHONG LI ; DEREK HOIEM.** Learning without forgetting. *IEEE transactions on pattern analysis and machine intelligence,* 2017, vol. 40 (12), 2935-2947
- **DAVID LOPEZ-PAZ ; MARC'AURELIO RANZATO.** Gradient episodic memory for continual learning. *Advances in neural information processing systems,* 2017, 6467-6476
- **MOLLIE K MARKO ; ADRIAN M HAITH ; MICHELLE D HARRAN ; REZA SHADMEHR.** Sensitivity to prediction error in reach adaptation. *Journal of neurophysiology,* 2012, vol. 108 (6), 1752-1763

- **JAMES L MCCLELLAND ; BRUCE L MCNAUGHTON ; RANDALL C O'REILLY.** Why there are complementary learning systems in the hippocampus and neocortex: insights from the successes and failures of connectionist models of learning and memory. *Psychological review,* 1995, vol. 102 (3), 419
- Catastrophic interference in connectionist networks: The sequential learning problem. **MICHAEL MCCLOSKEY ; NEAL J COHEN.** Psychology of learning and motivation. Elsevier, 1989, vol. 24, 109-165
- **GERMAN I PARISI ; RONALD KEMKER ; JOSE L PART ; CHRISTOPHER KANAN ; STEFAN WERMTER.** Continual lifelong learning with neural networks: A review. *Neural Networks,* 2019, vol. 113, 54-71
- **QUANG PHAM ; CHENGHAO LIU ; STEVEN HOI.** Dualnet: Continual learning, fast and slow. *Advances in Neural Information Processing Systems,* 2021, vol. 34, 16131-16144
- **AMAL RANNEN ; RAHAF ALJUNDI ; MATTHEW B BLASCHKO ; TINNE TUYTELAARS.** Encoder based lifelong learning. *Proceedings of the IEEE International Conference on Computer Vision,* 2017, 1320-1328
- **MATTHEW RIEMER ; IGNACIO CASES ; ROBERT AJEMIAN ; MIAO LIU ; IRINA RISH ; YUHAI TU ; GERALD TESAURO.** Learning to learn without forgetting by maximizing transfer and minimizing interference. *arXiv preprint arXiv:1810.11910,* 2018
- **HIPPOLYT RITTER ; ALEKSANDAR BOTEV ; DAVID BARBER.** Online structured laplace approximations for overcoming catastrophic forgetting. *Advances in Neural Information Processing Systems,* 2018, 3738-3748
- **FAHAD SARFRAZ ; ELAHE ARANI ; BAHRAM ZONOOZ.** Synergy between synaptic consolidation and experience replay for general continual learning. *arXiv preprint arXiv:2206.04016,* 2022
- **MAURICE A SMITH ; REZA SHADMEHR.** Modulation of the rate of error-dependent learning by the statistical properties of the task. *Advances in Computational Motor Control,* 2004, vol. 3, 1392-1404
- **JEFFREY S VITTER.** Random sampling with a reservoir. *ACM Transactions on Mathematical Software (TOMS),* 1985, vol. 11 (1), 37-57
- **MATTHEW P WALKER ; ROBERT STICKGOLD.** Sleep-dependent learning and memory consolidation. *Neuron,* 2004, vol. 44 (1), 121-133
- **ZIFENG WANG ; ZIZHAO ZHANG ; SAYNA EBRAHIMI ; RUOXI SUN ; HAN ZHANG ; CHEN-YU LEE ; XIAOQI REN ; GUOLONG SU ; VINCENT PEROT ; JENNIFER DY et al.** Dualprompt: Complementary prompting for rehearsal-free continual learning. *arXiv preprint arXiv:2204.04799,* 2022
- **ZIFENG WANG ; ZIZHAO ZHANG ; CHEN-YU LEE ; HAN ZHANG ; RUOXI SUN ; XIAOQI REN ; GUOLONG SU ; VINCENT PEROT ; JENNIFER DY ; TOMAS PFISTER.** Learning to prompt for continual learning. *Proceedings of the IEEE/CVF Conference on Computer Vision and Pattern Recognition,* 2022, 139-149
- **FRIEDEMANN ZENKE ; BEN POOLE ; SURYA GANGULI.** Continual learning through synaptic intelligence. *Proceedings of machine learning research,* 2017, vol. 70, 3987
- Knowledge distillation beyond model compression. **SARFRAZ, FAHAD ; ELAHE ARANI ; BAHRAM ZONOOZ.** 25th International Conference on Pattern Recognition (ICPR). IEEE, 2020
- **BHAT, PRASHANT ; BAHRAM ZONOOZ ; ELAHE ARANI.** Task Agnostic Representation Consolidation: a Self-supervised based Continual Learning Approach. *arXiv preprint arXiv:2207.06267,* 2022
- **SARFRAZ, FAHAD ; ELAHE ARANI ; BAHRAM ZONOOZ.** Noisy concurrent training for efficient learning under label noise. *Proceedings of the IEEE/CVF Winter Conference on Applications of Computer Vision,* 2021
- **ARANI, ELAHE ; FAHAD SARFRAZ ; BAHRAM ZONOOZ.** Noise as a resource for learning in knowledge distillation. *Proceedings of the IEEE/CVF Winter Conference on Applications of Computer Vision,* 2021
- **MAASS, WOLFGANG.** Noise as a resource for computation and learning in networks of spiking neurons. *Proceedings of the IEEE,* 2014, vol. 102.5, 860-880